# EUROPEAN PATENT APPLICATION

(11) **EP 4 793 816 A1**
(43) Date of publication of application: **19.08.2026**
(21) Application number: 23955303.5
(22) Date of filing: 27.11.2023
(51) Int. Cl.: G06F 40/18

(54) **INFORMATION DYNAMIC EXTRACTION METHOD AND SYSTEM FOR ELECTRONIC CHECKLIST TABLE**

(30) Priority: 13.10.2023 CN 202311329885
(71) Applicant: Commercial Aircraft Corporation Of China, Ltd., Shanghai 201210 (CN); Shanghai Aircraft Design and Research Institute of Commercial Aircraft Corporation of China, Shanghai 201210 (CN)
(72) Inventor: CHU, Jiangping, Shanghai 201210 (CN); WU, Lei, Shanghai 201210 (CN); MA, Shaobo, Shanghai 201210 (CN); ZHANG, Bo, Shanghai 201210 (CN); XU, Yao, Shanghai 201210 (CN)
(74) Representative: Epping - Hermann - Fischer
(86) International application number: PCT/CN2023/134345
(87) International publication number: WO 2025/076934

(57) **Abstract**

Disclosed in the present invention is an information dynamic extraction method for an electronic checklist (ECL) table, comprising: detecting whether a table exists in an ECL program; if a table exists in the ECL program, determining whether information extraction needs to be performed on the table; in response to determining that information extraction needs to be performed on the table, determining target parameters on the basis of the content of the table; determining an extraction range on the basis of aircraft state information and the target parameters; and extracting information from the table on the basis of the extraction range so as to display the extracted information in the ECL program.

## Description

### TECHNICAL FIELD

The present application relates to the field of avionics human-machine interface design, and in particular to a method and system for dynamic information extraction from an electronic checklist table.

### BACKGROUND

The design of integrated warning systems has always been a research focus for various civil aircraft manufacturers. However, the highly complex internal logic and complex data cross-link relationships with various aircraft systems greatly increase the difficulty of design and verification. While display and warning systems are deeply integrated, the introduction of intelligent design features is inevitably required to facilitate pilot handling.

As one of the important associated systems of warnings, the electronic checklist (ECL) system not only undertakes the function of an electronic QRH (Quick Reference Handbook) but also provides more intelligent and automated functions to reduce crew workload, improve crew handling efficiency, and enhance flight safety.

In the QRH, performance-related charts are provided for the crew to consult and perform corresponding operations when executing ECL checklist procedures under abnormal conditions. However, due to limitations in the electronic presentation format of ECL, it is impossible to draw an information table same as the QRH at a 1:1 scale. For some complex charts, due to the presentation limitations of electronic conversion, it is inconvenient for the crew to identify and understand. In addition, if the ECL checklist procedure has too many pages, it also affects the crew's operation and handling efficiency. These are difficulties encountered in ECL system design.

Most tables in the QRH have relatively complex contents and are quite large, making electronic replication impossible. Even if tables can be replicated, the readability of the replicated electronic tables decreases, especially when operation such as cross-page or page-turning is involved, which has a certain impact on crew workload.

In view of the deficiencies of the prior art, it is desirable to provide an improved method for dynamic information extraction from an ECL table.

### SUMMARY

A brief overview of one or more aspects is provided below to provide a basic understanding of such aspects. This overview is not an extensive survey of all contemplated aspects, and is intended neither to identify key or decisive elements of all aspects nor to delineate the scope of any or all aspects. Its sole purpose is to present some concepts of one or more aspects in a simplified form as a prelude to the more detailed description that is presented later.

The present application provides a method for dynamic information extraction from an electronic checklist (ECL) table, comprising: detecting whether a table exists in an ECL procedure; determining whether information extraction from the table is required based on detection of the table in the ECL procedure; determining a target parameter based on content of the table in response to determining that information extraction from the table is required; determining an extraction range based on aircraft state information and the target parameter; and extracting information from the table based on the extraction range to display the extracted information in the ECL procedure.

In some embodiments, determining whether information extraction from the table is required further comprises: determining whether all content of the table can be displayed in the ECL procedure; determining that information extraction from the table is not required in response to a determination that all content of the table can be displayed in the ECL procedure; and determining that information extraction from the table is required in response to a determination that not all content of the table can be displayed in the ECL procedure.

In some embodiments, the aircraft state information comprises external environment information, position and attitude information, and internal system information of an aircraft.

In some embodiments, determining the extraction range based on the aircraft state information and the target parameter further comprises: determining a current value and a change trend of the target parameter based on the aircraft state information; and determining the extraction range based on the current value and the change trend of the target parameter.

In some embodiments, determining the extraction range based on the current value and the change trend of the target parameter further comprises: determining a target position in the table based on the current value of the target parameter, wherein the current value of the target parameter is located at the target position; and determining an interval range including the target position in the table as the extraction range based on the change trend of the target parameter.

The present application further provides a system for dynamic information extraction from an electronic checklist (ECL) table, comprising: a table detection module configured to: detect whether a table exists in an ECL procedure; an extraction determination module configured to determine whether information extraction from the table is required based on detection of the table in the ECL procedure; a target parameter determination module configured to determine a target parameter based on content of the table in response to determining that information extraction from the table is required; an extraction range determination module configured to determine an extraction range based on aircraft state information and the target parameter; and an information extraction module configured to extract information from the table based on the extraction range to display the extracted information in the ECL procedure.

In some embodiments, the extraction determination module is further configured to: determine whether all content of the table can be displayed in the ECL procedure; determine that information extraction from the table is not required in response to a determination that all content of the table can be displayed in the ECL procedure; and determine that information extraction from the table is required in response to a determination that not all content of the table can be displayed in the ECL procedure.

In some embodiments, the aircraft state information comprises external environment information, position and attitude information, and internal system information of an aircraft.

In some embodiments, the extraction range determination module is further configured to: determine a current value and a change trend of the target parameter based on the aircraft state information; and determine the extraction range based on the current value and the change trend of the target parameter.

In some embodiments, the extraction range determination module is further configured to: determine a target position in the table based on the current value of the target parameter, wherein the current value of the target parameter is located at the target position; and determine an interval range including the target position in the table as the extraction range based on the change trend of the target parameter.

The present application further provides a computer-readable medium storing a computer program for dynamic information extraction from an electronic checklist (ECL) table, the computer program being executable by a processor to perform the aforementioned method for dynamic information extraction from an ECL table.

The technical solution of the present application ensures the readability of the replicated table and reduces crew workload by dynamically extracting information from the involved table when executing the ECL procedure. Meanwhile, extracting table information based on aircraft state information enables the extracted information to best reflect the current operating state and future operating trend of the aircraft, further improving crew handling efficiency and flight safety.

### BRIEF DESCRIPTION OF THE DRAWINGS

The features, essentials and advantages of the present application will become more apparent from the detailed description set forth below when taken in conjunction with the accompanying drawings. In the drawings, identical reference numerals denote corresponding components throughout. It should be noted that the described drawings are schematic and non-restrictive. In the drawings, the dimensions of some components may be exaggerated and not drawn to scale for illustrative purposes.
FIG. 1 and FIG. 2 show examples of presentation format of ECL table information in the prior art.
FIG. 3 shows an exemplary flowchart of a method for dynamic information extraction from an ECL table according to the present application.
FIG. 4 shows an exemplary process for dynamic information extraction from an ECL table according to the present application.
FIG. 5 shows a schematic diagram of presenting an ECL table using the method for dynamic information extraction from the ECL table according to the present application.
FIG. 6 shows a block diagram of a system for dynamic information extraction from an ECL table according to the present application.
FIG. 7 shows a block diagram of a device including a system for dynamic information extraction from an ECL table according to the present application.

### DETAILED DESCRIPTION

To make the objectives, technical solutions and advantages of the present application clearer, the present application is described in further detail below with reference to specific embodiments and accompanying drawings. In the following detailed description, numerous specific details are set forth to provide a thorough understanding of the described exemplary embodiments. It will be apparent, however, to those skilled in the art that the described embodiments may be practiced without some or all of these specific details. In other exemplary embodiments, well-known structures are not described in detail to avoid unnecessarily obscuring the concepts of the present application. It should be understood that the specific embodiments described herein are only used to explain the present application and are not intended to limit the present application. Meanwhile, various aspects described in the embodiments may be combined arbitrarily without conflict.

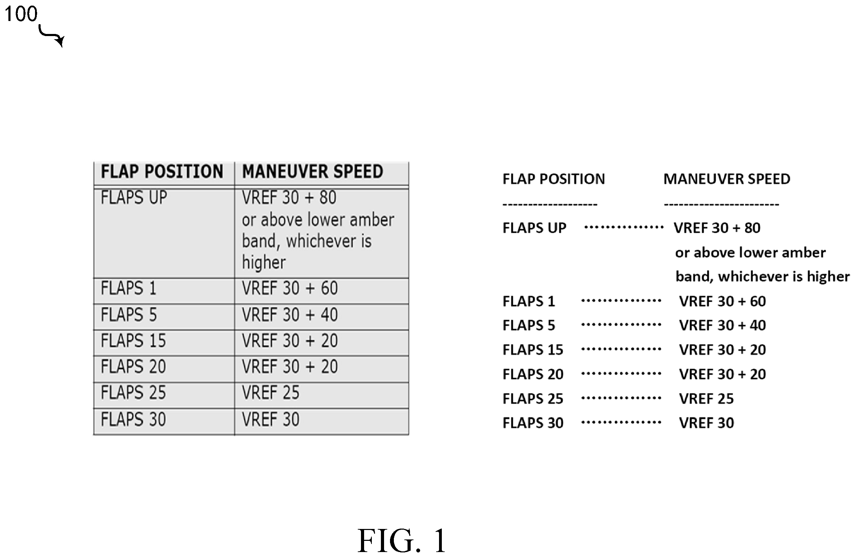

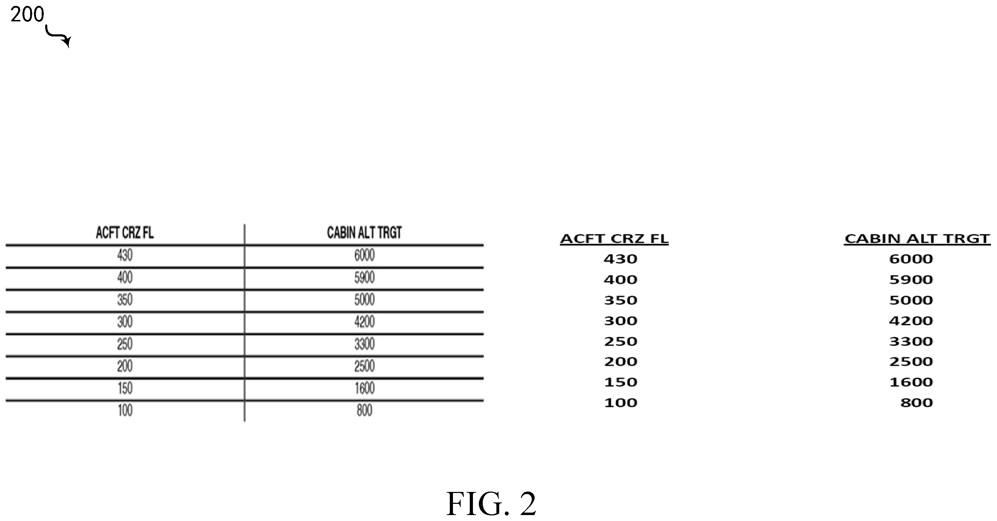

FIG. 1 and FIG. 2 show examples of presentation format of ECL table information in the prior art.

In the prior art, table information in the QRH is usually replicated using simple solid and dotted lines, as shown in example 100 in FIG. 1.

The left side of FIG. 1 shows the original table in the QRH, and the right side shows the presentation format of the table in the ECL procedure. As can be seen from FIG. 1, when presented in the ECL procedure, boxes in the original table are replaced by solid and dotted lines.

In addition, some aircraft models adopt the method of imaging the tables in the QRH by copying the tables after removing boxes, as shown in example 200 in FIG. 2.

The left side of FIG. 2 shows the original table in the QRH, and the right side shows the presentation format of the table in the ECL procedure. As can be seen from FIG. 2, when presented in the ECL procedure, boxes in the original table are removed.

For simple table information, the above presentation formats can ensure certain readability, but these formats do not perform any processing on the information, and require the crew to look up the table and retrieve relevant data according to current aircraft state information. Moreover, for relatively complex tables, the readability after electronic replication is quite low. Involvement of cross-page and page-turning operations also affects crew operation and handling efficiency.

In addition, when the table is overly complex, the ECL procedure will advise the pilot to refer to the paper QRH, resulting in the crew needing to interrupt operations to consult the QRH again, greatly increasing the workload.

In view of this, the present application proposes a method and system for dynamic information extraction from an ECL table. By dynamically extracting appropriate information from the original table based on aircraft state information and displaying it in the ECL procedure, table content can be simplified, table readability can be improved, facilitating identification and understanding by the crew, and enhancing crew operation and handling efficiency.

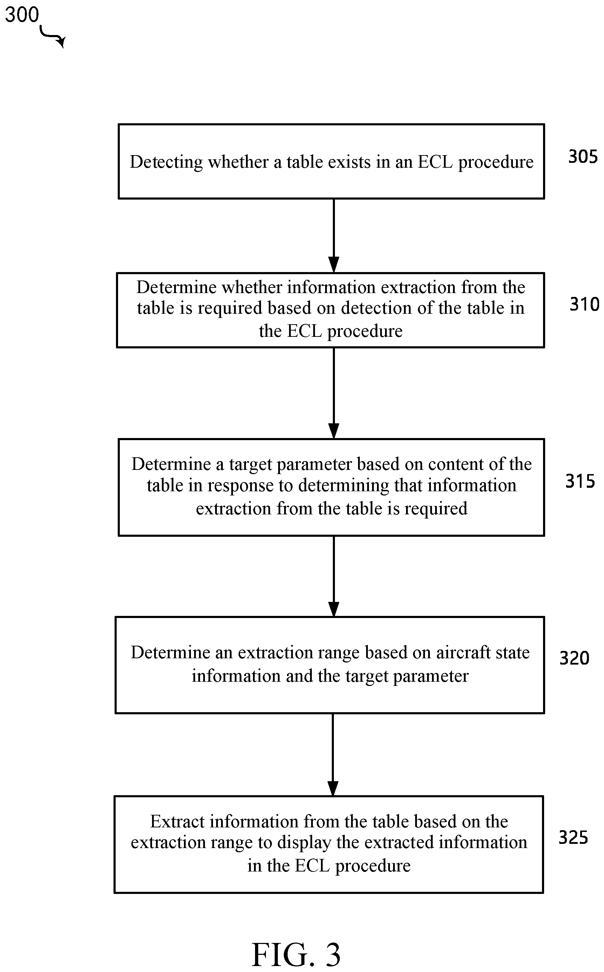

FIG. 3 shows an exemplary flowchart of a method 300 for dynamic information extraction from an ECL table according to the present application.

The method 300 begins at step 305. At step 305, it is detected whether a table exists in an ECL procedure.

When the ECL procedure starts, it may be detected whether a table exists in the ECL procedure. If no table exists, extraction and presentation of table content need not be considered. In such a case, other non-table information of the ECL procedure may be displayed.

At step 310, it is determined whether information extraction from the table is required based on detection of the table in the ECL procedure.

In some embodiments, determining whether information extraction from the table is required may further comprise: determining whether all content of the table can be displayed in the ECL procedure; determining that information extraction from the table is not required in response to a determination that all content of the table can be displayed in the ECL procedure; and determining that information extraction from the table is required in response to a determination that not all content of the table can be displayed in the ECL procedure.

Specifically, whether all content of the table can be displayed in the ECL procedure may be determined according to the size of the table. For example, the size of the table may be estimated based on information such as the number of entries listed in the table (e.g., the number of listed parameters), the presentation format of entries (such as the precision of numerical entries, the character count and font size of text entries, etc.), and the number of rows and columns of the table, so as to determine the display area required to display all content of the table. Based on this, it can be determined whether the display screen associated with the ECL procedure can accommodate the required display area.

If the display screen associated with the ECL procedure can accommodate the display area required to display all content of the table, it may be determined that all content of the table can be displayed in the ECL procedure. In this case, all content of the table may be displayed in the ECL procedure without need for information extraction from the table.

If the display screen associated with the ECL procedure cannot accommodate the display area required to display all content of the table, it may be determined that not all content of the table can be displayed in the ECL procedure. In this case, it may be determined that information extraction from the table is required.

At step 315, a target parameter is determined based on content of the table in response to determining that information extraction from the table is required.

Different tables in the ECL procedure may involve different parameters. For example, the table in FIG. 1 involves two parameters: FLAP POSITION and MANEUVER SPEED, while the table in FIG. 2 involves two parameters: ACFT CRZ FL (AIRCRAFT CRUIZING ALTITUDE) and CABIN ALT TRGT (CABIN ALTITUDE TARGET).

When it is determined that information extraction from the table is required, various parameters involved in the table may be further determined based on content of the table. Referring to FIG. 1, the two parameters FLAP POSITION and MANEUVER SPEED may be taken as the target parameters.

At step 320, an extraction range is determined based on aircraft state information and the target parameter.

In some embodiments, aircraft state information may refer to various information related to aircraft manipulation and operation, including but not limited to external environment information, position and attitude information, and internal system information of an aircraft. Specifically, external environment information may include information related to the external environment where the aircraft is located, such as but not limited to temperature, air pressure, wind speed, external obstacle information, etc. of the environment where the aircraft is currently located. Position and attitude information may include information related to the position and attitude of the aircraft, such as but not limited to altitude, speed, acceleration, weight, pitch angle, roll angle, etc. of the aircraft. Internal system information may include main operating parameter information of various systems/modules inside the aircraft.

In some embodiments, determining the extraction range based on the aircraft state information and the target parameter further comprises: determining a current value and a change trend of the target parameter based on the aircraft state information; and determining the extraction range based on the current value and the change trend of the target parameter.

Specifically, when the target parameter(s) are aircraft speed, altitude and weight, the current speed, current altitude and current weight of the aircraft may be determined based on the aircraft state information. Meanwhile, the flight trend of the aircraft may also be determined based on the aircraft state information, thereby determining the speed change trend, altitude change trend and weight change trend of the aircraft. For example, it is determined whether the speed, altitude and weight of the aircraft will increase or decrease in a future period of time as well as the magnitude of change.

Based on the current value(s) of the target parameter(s) (current speed, current altitude and current weight), a target position(s) in the table may be determined, where the current value(s) of the target parameter(s) are located at the target position(s).

For example, each position in the table (i.e., each element in the table) has a corresponding parameter value (corresponding speed, altitude and weight). Thus, a position in the table having the same parameter value as the current value of the target parameter may be found as the target position.

In the case where there is no position in the table having a parameter value exactly identical to the current value of the target parameter, a position in the table having a parameter value closest to the current value of the target parameter may be taken as the target position.

After determining the target position in the table, an interval range in the table may be determined based on the change trend of the target parameter, where the target position is included in the interval range.

For example, if the change trend of the target parameter indicates that the speed of the aircraft is increasing, the altitude remains unchanged, and the weight is decreasing, the target position in the table and an area adjacent to the target position consistent with the change trend of the target parameters may be selected as the interval range.

For example, assuming the target position is located at row i and column j of the table, and the area to the right of the target position is consistent with the change trend of the target parameter (i.e., the table elements in the area to the right of the target position have the speed that increases, the altitude that remains unchanged, and the weight that decreases). Thus, row i and column j of the table and several columns to the right of row i and column j (e.g., L columns, where the value of L may be set according to actual conditions) may be taken as the interval range.

At step 325, information is extracted from the table based on the extraction range to display the extracted information in the ECL procedure.

Through the determined extraction range, table information within the extraction range may be obtained and displayed.

In some implementations, the displayed table information may remain unchanged during execution of a single ECL procedure. For example, when the time taken to execute a single ECL procedure is short, and the real-time operating state of the aircraft does not change much during execution of the procedure on the page where the table is located, the displayed table information may remain unchanged to avoid frequent changes in the information presented to the crew, which is not conducive to identification and handling by the crew.

In other implementations, the displayed table information may be dynamically refreshed as needed during execution of a single ECL procedure. For example, when the time taken to execute a single ECL procedure is relatively long, the real-time operating state of the aircraft changes relatively significantly during execution of the procedure on the page where the table is located, or the change trend of the target parameter is relatively large, the displayed table information may be dynamically refreshed to make the table information more accurately reflect the real-time operating state of the aircraft. For example, refreshing may be performed at specific time intervals, or when the change trend of the target parameter is greater than a preset threshold, etc. In actual implementation, those skilled in the art may set specific refresh conditions according to actual situations.

Extracting and displaying table information in the above manner can reduce the display area compared with displaying all content of the table. Meanwhile, since the values of various parameters within the extraction range are closest to the current operating state and future operating trend of the aircraft, the displayed table information can best reflect the real-time operating state of the aircraft. Such table information extraction and display format can improve table readability, facilitate crew identification and understanding, and enhance crew operation and handling efficiency.

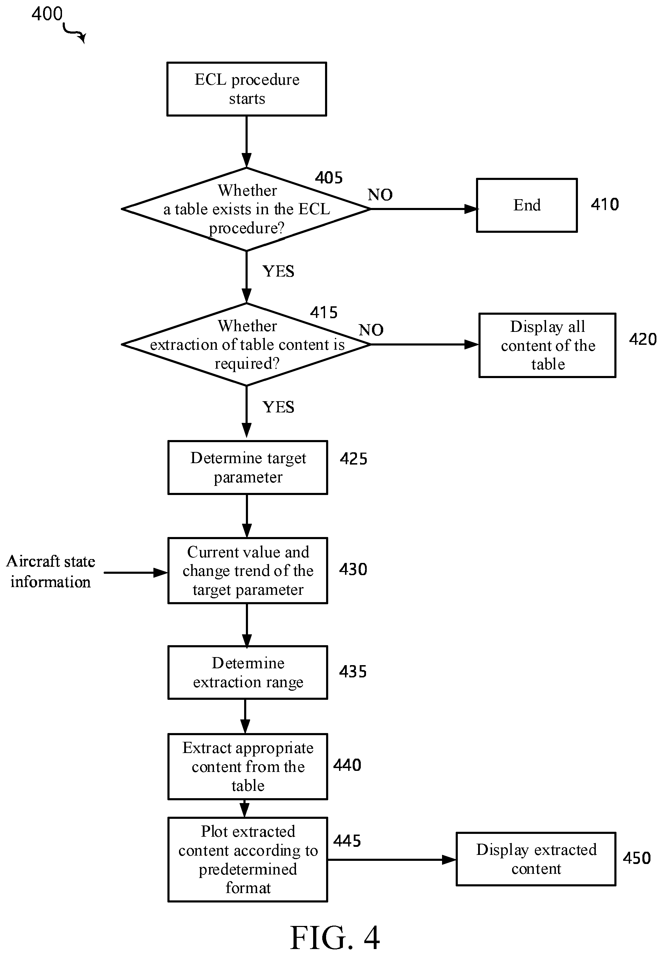

FIG. 4 shows an exemplary process 400 for dynamic information extraction from an ECL table according to the present application.

As shown in FIG. 4, when the ECL procedure starts, it may first be determined whether a table exists in the ECL procedure (405).

If no table exists in the ECL procedure (decision block 405 = "NO"), information extraction from the ECL table is not required, and the process 400 ends (410).

If a table exists in the ECL procedure (decision block 405 = "YES"), it may be further determined whether extraction of table content is required (415).

If it is determined that extraction of table content is not required (decision block 415 = "NO"), all content of the table may be displayed (420).

For example, if it is determined that the table content is relatively simple, the table size is relatively small, and all content of the table can be completely displayed in the ECL procedure, it may be determined that extraction of table content is not required.

If it is determined that extraction of table content is required (decision block 415 = "YES"), a target parameter may be determined based on content of the table (425).

Subsequently, a current value and a change trend of the target parameter may be determined based on the aircraft state information (430).

Based on the current value and change trend of the target parameter, an extraction range in the table may be determined (435). The specific process of determining the extraction range has been explained in detail above in conjunction with step 320 of FIG. 3 and will not be repeated here.

After obtaining the extraction range, appropriate content may be extracted from the table based on the extraction range (440). For example, all content within the extraction range in the table may be extracted.

Next, the extracted content may be plotted according to a predetermined format (445). For example, a specific aircraft model may require the ECL procedure to adopt a specific table presentation format. Thus, the extracted content may be plotted according to the format required by the specific aircraft model.

Finally, the extracted content may be displayed in the ECL procedure (450).

It should be noted that the process 400 for dynamic information extraction from an ECL table shown in FIG. 4 is exemplary and non-restrictive. In actual implementation, those skilled in the art may adopt other appropriate ways to implement the process 400 according to actual situations.

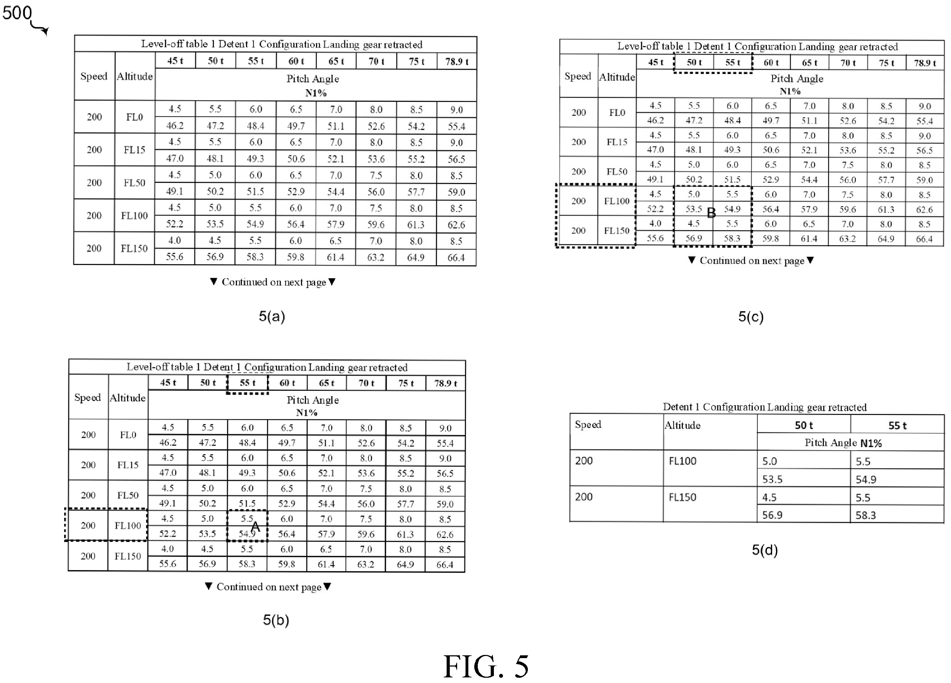

FIG. 5 shows a schematic diagram 500 of presenting an ECL table using the method for dynamic information extraction from an ECL table according to the present application.

For ease of illustration, a level-off table is taken as an exemplary table in FIG. 5. 5(a) shows an example of a level-off table in the QRH. As can be seen from 5(a), the level-off table has a relatively large amount of content and a large size, cannot be displayed on a single page, and involves page-turning operations. If all content of the level-off table is displayed in the ECL procedure in a one-to-one replication manner, the readability of the replicated table degrades, and it is not conducive to quick lookup and operation by the crew.

Thus, information extraction may be performed on the level-off table in 5(a). Specifically, the method for dynamic information extraction from an ECL table proposed by the present application may be adopted to extract information from the level-off table.

As can be seen from 5(a), the level-off table involves multiple parameters, such as aircraft speed, altitude, weight, etc. When extracting information from the level-off table, these parameters may be taken as the target parameters.

Subsequently, current values of the target parameters may be determined based on the aircraft state information.

As an example, assume the current airspeed of the aircraft is 200, the current altitude is FL100, and the current weight is 55t. Based on these current parameter values, a target position in the level-off table may be determined. As shown in 5(b), the framed position A corresponds to parameter values identical to the current values of the target parameters. Thus, position A is the target position.

In some embodiments, if a position identical to the current values of the target parameters cannot be found in the table, a position closest to the current values of the target parameters may be selected as the target position. For example, if the current airspeed of the aircraft is 200, the current altitude is FL100, and the current weight is 54t, there is no corresponding position in the table exactly matching these parameter values. In this case, a position (position A) closest to these parameter values may be determined and taken as the target position.

After obtaining the target position (position A), an extraction range may be determined based on the change trend of the target parameters.

As an example, assume it is learned based on the aircraft state information that the flight trend of the aircraft is constant airspeed, increasing altitude, and decreasing weight. Based on this change trend, a specific area in the table where the airspeed is still 200 (remain unchanged), the altitude increases (greater than FL100, the area below position A), and the weight decreases (less than 55t, the area to the left of position A) may be selected as the extraction range.

5(c) shows an exemplary extraction range B. As can be seen from 5(c), the extraction range B includes the target position A and the area to the lower left of the target position A. Specifically, the extraction range B includes a table area where the airspeed is equal to 200, the altitude is FL100 and FL150, and the weight is 55t and 50t.

It should be noted that the extraction range B shown in 5(c) is exemplary and non-restrictive. In actual implementation, those skilled in the art may set a larger or smaller extraction range than that in 5(c) as needed. For example, the extraction range in 5(c) covers two rows of altitude information (FL100 and FL150) in the table. In actual implementation, if the altitude of the aircraft changes rapidly, it may be desirable to display more altitude-related information to the crew. In this case, the extraction range may cover more rows of altitude information (e.g., three or more rows).

5(d) shows information extracted from the level-off table based on the extraction range B in 5(c). As can be seen from 5(d), the extracted information includes all table information within the extraction range. Displaying the extracted table information to the crew instead of all content of the original table simplifies the table while retaining key information (information closely related to the current and future operating states of the aircraft), improving table readability, which helps the crew quickly identify and understand the table content. Meanwhile, the simplified table content can be completely displayed at one time without page-turning operations, thereby improving crew operation and handling efficiency.

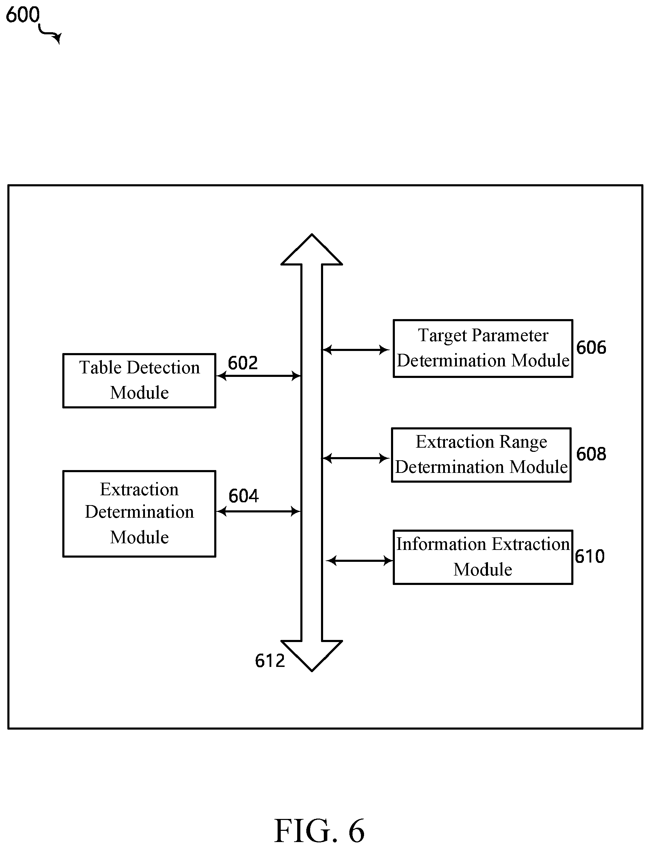

FIG. 6 shows a block diagram of a system 600 for dynamic information extraction from an ECL table according to the present application.

Referring to FIG. 6, the system 600 may comprise a table detection module 602, an extraction determination module 604, a target parameter determination module 606, an extraction range determination module 608, and an information extraction module 610. Each of these modules may be directly or indirectly connected to or communicate with each other via one or more buses 612.

In various embodiments of the present application, the table detection module 602 may be configured to detect whether a table exists in an ECL procedure.

The extraction determination module 604 may be configured to determine whether information extraction from the table is required based on detection of the table in the ECL procedure.

In some embodiments of the present application, the extraction determination module 604 may be further configured to: determine whether all content of the table can be displayed in the ECL procedure; determine that information extraction from the table is not required in response to a determination that all content of the table can be displayed in the ECL procedure; and determine that information extraction from the table is required in response to a determination that not all content of the table can be displayed in the ECL procedure.

The target parameter determination module 606 may be configured to determine a target parameter based on content of the table in response to determining that information extraction from the table is required.

The extraction range determination module 608 may be configured to determine an extraction range based on aircraft state information and the target parameter.

In some embodiments of the present application, the extraction range determination module 608 may be further configured to: determine a current value and a change trend of the target parameter based on the aircraft state information; and determine the extraction range based on the current value and the change trend of the target parameter.

In some embodiments of the present application, the extraction range determination module 608 may be further configured to: determine a target position in the table based on the current value of the target parameter, wherein the current value of the target parameter is located at the target position; and determine an interval range including the target position in the table as the extraction range based on the change trend of the target parameter.

The information extraction module 610 may be configured to extract information from the table based on the extraction range to display the extracted information in the ECL procedure.

Although FIG. 6 shows specific modules of the system 600, it should be understood that these modules are exemplary and non-restrictive. In different implementations, one or more of these modules may be combined, split, removed, or additional modules may be added. For example, in some implementations, the target parameter determination module 606 and the extraction range determination module 608 may be merged into a single module. In some implementations, the system 600 may further include additional modules.

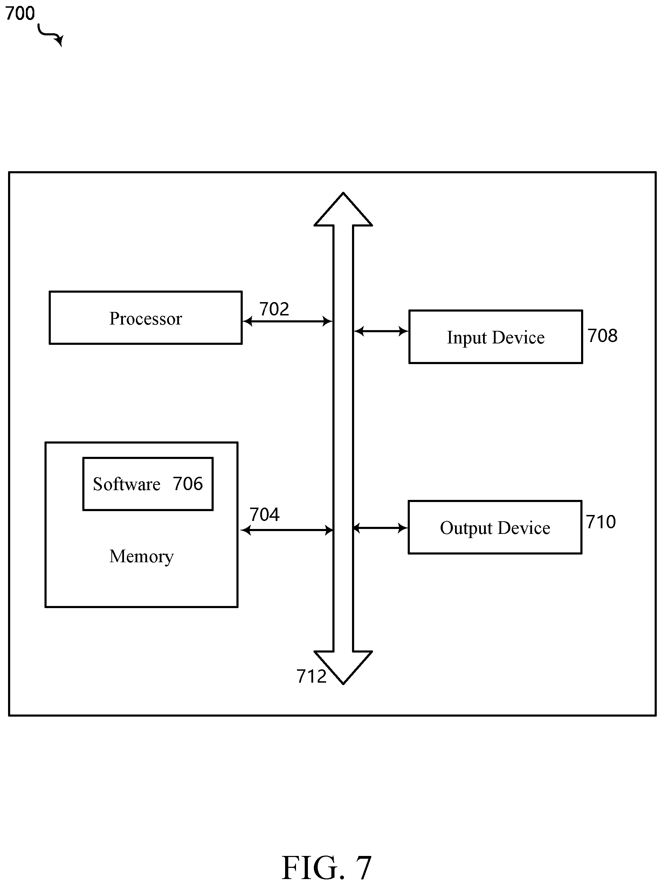

FIG. 7 shows a block diagram of a device 700 including a system for dynamic information extraction from an ECL table according to the present application.

The device shows a general hardware environment in which the present application may be applied according to exemplary embodiments of the present application.

A device 700 will now be described with reference to FIG. 7. The device 700 is an exemplary embodiment of a hardware device to which various aspects of the present application may be applied. The device 700 may be any machine configured to perform processing and/or computation, including but not limited to a workstation, server, desktop computer, laptop computer, tablet computer, Personal Digital Assistant (PDA), smart phone, or any combination thereof. The above system may be implemented in whole or at least in part by the device 700 or a similar device or system.

The device 700 may include components that may be connected to or communicate with a bus 712 via one or more interfaces. For example, the device 700 may include the bus 712, a processor 702, a memory 704, an input device 708, an output device 710, and so on.

The processor 702 may be any type of processor and may include, but is not limited to, a general-purpose processor and/or a special-purpose processor (e.g., a special processing chip), an intelligent hardware device (e.g., a general-purpose processor, DSP, CPU, microcontroller, ASIC, FPGA, programmable logic device, discrete gate or transistor logic component, discrete hardware component, or any combination thereof). In some cases, the processor 702 may be configured to operate a memory array using a memory controller. In other cases, a memory controller (not shown) may be integrated into the processor 702. The processor 702 may be responsible for managing the bus and general processing, including executing software stored in the memory. The processor 702 may also be configured to perform various functions related to dynamic information extraction from an ECL table described herein. For example, the processor 702 may be configured to: detect whether a table exists in an ECL procedure; determine whether information extraction from the table is required based on detection of the table in the ECL procedure; determine a target parameter based on content of the table in response to determining that information extraction from the table is required; determine an extraction range based on aircraft state information and the target parameter; and extract information from the table based on the extraction range to display the extracted information in the ECL procedure.

The memory 704 may be any storage device capable of implementing data storage. The memory 704 may include, but is not limited to, a disk drive, optical storage device, solid-state memory, floppy disk, hard disk, magnetic tape or any other magnetic medium, optical disk or any other optical medium, ROM (Read-Only Memory), RAM (Random-Access Memory), cache memory and/or any other memory chip or cartridge, and/or any other medium from which a computer can read data, instructions and/or code. The memory 704 may store computer-executable software 706 including computer-readable instructions that, when executed, cause the processor to perform various functions related to dynamic information extraction from an ECL table described herein.

The input device 708 may be any type of device that can be used to input information.

The output device 710 may be any type of device for outputting information. In one case, the output device 710 may be any type of output device capable of displaying information.

The detailed description set forth above in conjunction with the accompanying drawings describes examples and does not represent all examples that can be implemented or fall within the scope of the claims. The terms "example" and "exemplary" when used in this specification mean "serving as an example, instance, or illustration," and do not mean "preferred over or superior to other examples."

Reference to "one embodiment" or "an embodiment" throughout this specification means that a particular feature, structure, or characteristic described in connection with the embodiment is included in at least one embodiment of the present application. Therefore, the use of these phrases may not refer solely to one embodiment. Furthermore, the described features, structures, or characteristics may be combined in any suitable manner in one or more embodiments.

The previous description is provided to enable any person skilled in the art to practice the various aspects described herein. Various modifications to these aspects will be readily apparent to those skilled in the art, and the generic principles defined herein may be applied to other aspects. Therefore, the claims are not intended to be limited to the aspects shown herein but are to be accorded the full scope consistent with the language of the claims, wherein reference to an element in the singular is not intended to mean "one and only one" unless specifically stated, but rather "one or more." Unless specifically stated otherwise, the term "some" refers to one or more. All structural and functional equivalents to the elements of the various aspects described throughout this application that are known or later come to be known to those of ordinary skill in the art are expressly incorporated herein by reference and are intended to be encompassed by the claims.

It should also be noted that these embodiments may be described as processes depicted as flowcharts, flow diagrams, structure diagrams, or block diagrams. Although a flowchart may describe operations as a sequential process, many of these operations can be performed in parallel or concurrently. In addition, the order of these operations may be rearranged.

Although various embodiments have been illustrated and described, it should be understood that the embodiments are not limited to the precise configurations and components described above. Various modifications, substitutions, and improvements that are apparent to those skilled in the art may be made in the arrangement, operation, and details of the devices disclosed herein without departing from the scope of the claims.

## Claims

1. A method for dynamic information extraction from an electronic checklist (ECL) table, comprising:
detecting whether a table exists in an ECL procedure;
determining whether information extraction from the table is required based on detection of the table in the ECL procedure;
determining a target parameter based on content of the table in response to determining that information extraction from the table is required;
determining an extraction range based on aircraft state information and the target parameter; and
extracting information from the table based on the extraction range to display the extracted information in the ECL procedure.

2. The method according to claim 1, wherein determining whether information extraction from the table is required further comprises:
determining whether all content of the table can be displayed in the ECL procedure;
determining that information extraction from the table is not required in response to a determination that all content of the table can be displayed in the ECL procedure; and
determining that information extraction from the table is required in response to a determination that not all content of the table can be displayed in the ECL procedure.

3. The method according to claim 1, wherein the aircraft state information comprises external environment information, position and attitude information, and internal system information of an aircraft.

4. The method according to claim 1, wherein determining the extraction range based on the aircraft state information and the target parameter further comprises:
determining a current value and a change trend of the target parameter based on the aircraft state information; and
determining the extraction range based on the current value and the change trend of the target parameter.

5. The method according to claim 4, wherein determining the extraction range based on the current value and the change trend of the target parameter further comprises:
determining a target position in the table based on the current value of the target parameter, wherein the current value of the target parameter is located at the target position; and
determining an interval range including the target position in the table as the extraction range based on the change trend of the target parameter.

6. A system for dynamic information extraction from an electronic checklist (ECL) table, comprising:
a table detection module configured to detect whether a table exists in an ECL procedure;
an extraction determination module configured to determine whether information extraction from the table is required based on detection of the table in the ECL procedure;
a target parameter determination module configured to determine a target parameter based on content of the table in response to determining that information extraction from the table is required;
an extraction range determination module configured to determine an extraction range based on aircraft state information and the target parameter; and
an information extraction module configured to extract information from the table based on the extraction range to display the extracted information in the ECL procedure.

7. The system according to claim 6, wherein the extraction determination module is further configured to:
determine whether all content of the table can be displayed in the ECL procedure;
determine that information extraction from the table is not required in response to a determination that all content of the table can be displayed in the ECL procedure; and
determine that information extraction from the table is required in response to a determination that not all content of the table can be displayed in the ECL procedure.

8. The system according to claim 6, wherein the aircraft state information comprises external environment information, position and attitude information, and internal system information of an aircraft.

9. The system according to claim 6, wherein the extraction range determination module is further configured to:
determine a current value and a change trend of the target parameter based on the aircraft state information; and
determine the extraction range based on the current value and the change trend of the target parameter.

10. The system according to claim 9, wherein the extraction range determination module is further configured to:
determine a target position in the table based on the current value of the target parameter, wherein the current value of the target parameter is located at the target position; and
determine an interval range including the target position in the table as the extraction range based on the change trend of the target parameter.

11. A computer-readable medium storing a computer program for dynamic information extraction from an electronic checklist (ECL) table, the computer program being executable by a processor to perform the method according to any one of claims 1-5.
